# EUROPEAN PATENT APPLICATION

(11) **EP 4 525 190 A1**
(43) Date of publication of application: **19.03.2025**
(21) Application number: 23932315.7
(22) Date of filing: 08.08.2023
(51) Int. Cl.: H01M 50/507

(54) **BATTERY ACQUISITION AND CONNECTION ASSEMBLY, BATTERY MODULE, AND BATTERY PACK**

(30) Priority: 07.07.2023 CN 202321788169 U; 07.07.2023 CN 202310835127
(71) Applicant: Eve Energy Co., Ltd., Huizhou, Guangdong 516006 (CN)
(72) Inventor: LI, Dongjun, Huizhou, Guangdong 516000 (CN)
(74) Representative: Murgitroyd & Company
(86) International application number: PCT/CN2023/111631
(87) International publication number: WO 2025/010789

(57) **Abstract**

A battery collection and connection assembly, a battery module and a battery pack are disclosed in the present application. The battery collection and connection assembly includes a tray, first busbar unit(s), insulating members, a thermoplastic film and flexible circuit board(s). Each first busbar unit includes busbars arranged at intervals along a length direction of the tray, each insulating member is located in the first busbar unit(s) and arranged between two adjacent busbars along the length direction of the tray to insulate the adjacent busbars from each other. The thermoplastic film wraps the tray, the first busbar unit(s) and the insulating members as a whole. The flexible circuit board(s) are disposed on the thermoplastic film, and each first busbar unit is provided with a corresponding flexible circuit board. In the present application, the insulating member is provided between two adjacent busbars in the first busbar unit, which prevents the two adjacent busbars from being direct contact to lead to a short circuit.

## Description

This application claims priority to Chinese Patent Application No. 202310835127.4, titled with "BATTERY COLLECTION AND CONNECTION ASSEMBLY, BATTERY MODULE AND BATTERY PACK" and filed on July 07, 2023, the disclosure of which is incorporated herein by reference in its entirety.

### TECHNICAL FIELD

The present application relates to the field of energy storage technologies, and in particular to a battery collection and connection assembly, a battery module and a battery pack.

### BACKGROUND

Cells contact system (CCS) components are configured within a battery pack to collect temperatures and voltages of multiple battery cells in the battery pack, achieving status monitoring of the multiple battery cells. The multiple battery cells are connected to each other through busbars to achieve electrical connection of the multiple battery cells. In the battery pack, both the busbars and the CCS components are generally arranged above the multiple battery cells. Since the busbars and the CCS components are separately arranged, the assembly process of the battery pack is relatively complex and the efficiency is relatively low.

In light of this, the CCS components and the busbars are generally integrated into one piece to improve the assembly efficiency of the battery pack. However, due to the close spacing between the battery cells and the integrated arrangement of the busbars and the CCS components, there is a risk of short circuit occurring between adjacent busbars, which poses an electrical safety hazard.

### SUMMARY

The main purpose of embodiments of the present application is to provide a battery collection connection assembly, a battery module and a battery pack, aiming to ameliorate the technical problem in existing technology that the busbars in the battery pack are prone to short circuit due to the close spacing of the battery cells.

Technical solutions of the present application is as follows.

In a first aspect, embodiments of the present application propose a battery collection and connection assembly, which includes:
at least one first busbar unit, each of the at least one first busbar unit including a plurality of busbars that are disposed on a surface of the tray and arranged at intervals along a length direction of the tray;
a plurality of insulating members located in the at least one first busbar unit and connected to the tray, each of the plurality of insulating members being arranged between two adjacent busbars along the length direction of the tray to insulate the two adjacent busbars at two sides of the insulating member;
a thermoplastic film configured to wrap the tray, the at least one first busbar unit and the plurality of insulating members as a whole; and
at least one flexible circuit board disposed on the thermoplastic film, one or more of the at least one flexible circuit board being in a one-to-one correspondence with the at least one first busbar unit, and each of the one or more flexible circuit boards being connected to all the busbars in the corresponding first busbar unit and located at a side of the first busbar unit.

Furthermore, the at least one first bus unit included in the battery collection and connection assembly is provided in a number of two, and the two first busbar units are adjacently arranged at a middle portion of the tray; the busbars in one of the two first busbar units are arranged in a one-to-one correspondence with the busbars in another of the two first busbar units, and the insulating members located in the one first busbar unit are arranged in a one-to-one correspondence with the insulating members located in the another first busbar unit.

Furthermore, each insulating member located in the one first busbar unit and its corresponding insulating member located in the another first busbar unit are of a one-piece structure.

Furthermore, the one-piece structure includes a first partition and two second partitions that are connected to resemble a shape of a letter "I", the first partition is disposed between the two adjacent busbars in each of the two first busbar units, and each of the second partitions is disposed at a side of the busbars close to one of the at least one flexible circuit board adjacent thereto.

Furthermore, a surface of each of the plurality of busbars in the first busbar unit is recessed relative to a surface of the tray, and each busbar cooperates with the tray to form a groove structure for insertion engagement with a terminal post of a battery cell.

Furthermore, the battery collection and connection assembly further includes at least one second busbar unit arranged at an interval from the at least one first busbar unit, the at least one second busbar unit is disposed at an outer side of the tray and connected to the tray, and the thermoplastic film wraps the tray, the at least one first busbar unit, the at least one second busbar unit and the insulating members as a whole.

Furthermore, the tray is provided with a column of explosion-proof valve holes, the column of explosion-proof valve holes includes a plurality of explosion-proof valve holes arranged at intervals along the length direction of the tray, a first latch is provided in a region of the tray between two adjacent explosion-proof valve holes in the column of explosion-proof valve holes, and the first latch is used for clamping an explosion-proof valve installed in the plurality of explosion-proof valve holes.

Furthermore, an end of the tray is provided with a reinforcing plate, and a portion of a flexible circuit board in the at least one flexible circuit board extends onto the reinforcing plate; the battery collection and connection assembly further includes a connector located on the reinforcing plate and electrically connected to the one or more flexible circuit boards, and the one or more connectors are used for connection with an external control device.

In a second aspect, embodiments of the present application provide a battery module, the battery module includes:
a plurality of battery cells, and
the battery collection and connection assembly, each busbar in the battery collection and connection assembly is used to electrically connect two adjacent battery cells of the plurality of battery cells.

In a third aspect, embodiments of the present application provide a battery pack including the battery module.

### BENEFITS

The present application has following beneficial effects: for the battery collection and connection assembly, in each first busbar unit on the tray, an insulating member is provided between every two adjacent busbars to separate the adjacent busbars, thereby insulating the two adjacent busbars from each other. Therefore, the two adjacent busbars may be prevented from being direct contact to lead to a short circuit, thereby enhancing the safety and reliability of the battery pack.

### BRIEF DESCRIPTION OF THE DRAWINGS

The following detailed description of the specific embodiments of the present application, in conjunction with the accompanying drawings, will make the technical solutions and beneficial effects of the present application obvious.
FIG. 1 is a schematic structural diagram (top view) of a battery collection and connection assembly in embodiments of the present application;
FIG. 2 is a schematic structural diagram (oblique axial view) of a battery collection and connection assembly in embodiments of the present application;
FIG. 3 is a schematic structural diagram of an insulating member in embodiments of the present application;
FIG. 4 is a schematic structural diagram of a connection between a reinforcing plate and flexible circuit boards in embodiments of the present application;
FIG. 5 is a schematic structural diagram of groove structures formed by the busbars in a first busbar unit and a tray in embodiments of the present application; and
FIG. 6 is a schematic diagram showing a positional relationship between explosion-proof valve holes and a first latch in embodiments of the present application.

### DETAILED DESCRIPTION

The specific structures and functional details disclosed herein are merely exemplary and are used for the purpose of describing exemplary embodiments of the present application. However, the present application may be embodied in many alternative forms and should not be interpreted as being limited to the embodiments described herein.

It will be understood that, in the description of the present application, terms indicating directional or positional relationships such as "center", "transverse", "up", "down", "left", "right", "vertical", "horizontal", "top", "bottom", "inside" and "outside" are based on the directional or positional relationships shown in the drawings and are intended solely for the convenience of describing the present application and simplifying the description, rather than indicating or implying that the devices or components referred to must have specific orientations, be constructed and operated in specific orientations, and thus should not be understood as limiting the scope of the present application. In addition, the terms "first" and "second" are used for descriptive purposes only and should not be understood as indicating or implying relative importance or indicating or implying the number of the technical features indicated. Thus, features specified with "first" and "second" may explicitly or implicitly include one or more of such features. In the description of the present application, unless otherwise specified, the term "a plurality of" or "multiple" means two or more. In addition, the terms "comprise" and "include" and any variations thereof are intended to cover non- exclusive inclusion.

In the description of the present application, it will be noted that unless otherwise specifically defined and limited, terms such as "mounting", "connecting" and "connected" should be understood in a broad sense. For example, terms such as "mounting", "connecting" and "connected" may each be a support connection, a detachable connection or an integral connection. Terms such as "connecting" and "connected" may be a mechanical connection or an electrical connection; may be a direct connection or an indirect connection through an intermediary, and may be an internal connection between two components. For those of ordinary skill in the art, the specific meaning of the above terms in the present application will be understood in specific cases.

The terms used herein are intended solely for the purpose of describing the specific embodiments and are not intended to limit the exemplary embodiments. Unless the context clearly indicates otherwise, the singular forms "a" and "an" as used herein are also intended to include the plural. It will also be understood that the terms "comprising" and "including" as used herein specify the presence of at least one of the stated features, such as integers, steps, operations, units and components, without excluding the existence or addition of one or more other features, such as integers, steps, operations, units and components.

Further explanation of the present application is provided below in conjunction with the drawings and embodiments.

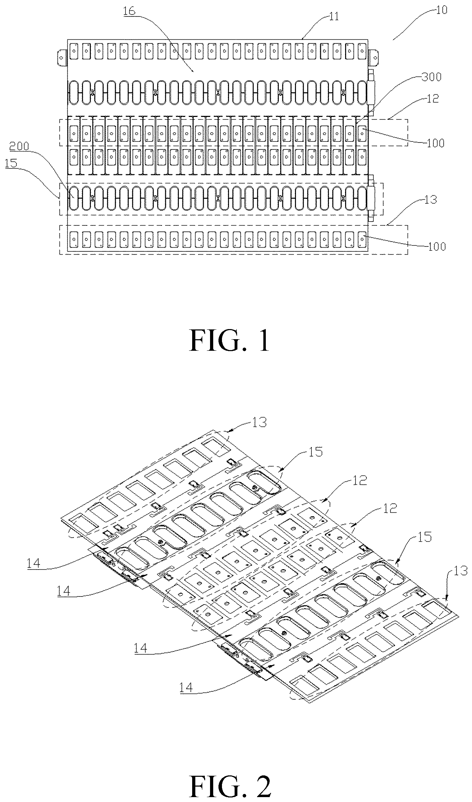

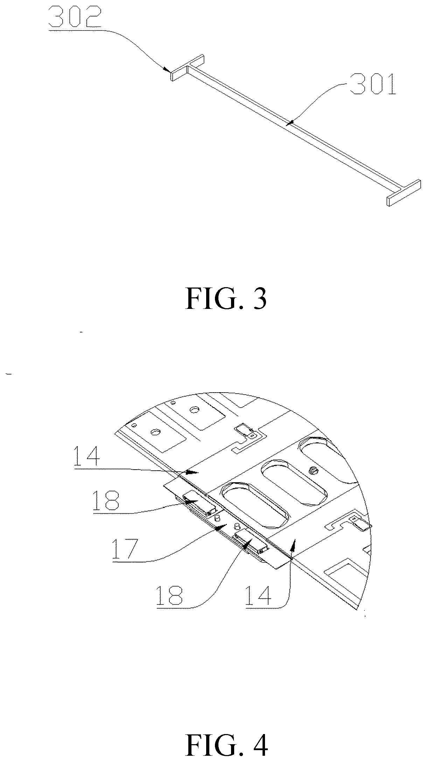

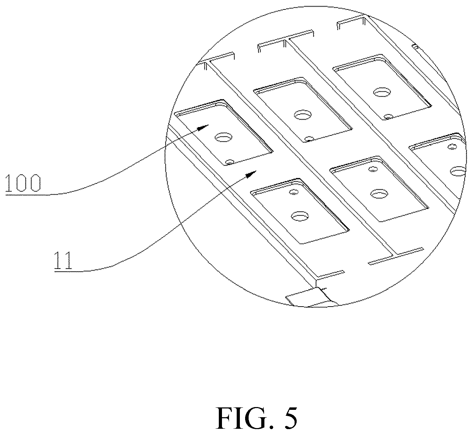

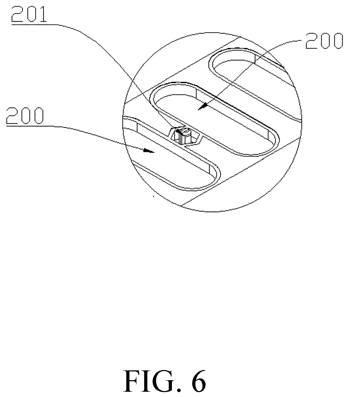

As shown in FIGS. 1 to 6, a battery collection and connection assembly 10 is provided in the present application, and the battery collection and connection assembly 10 includes a tray 11, at least one first busbar unit 12, insulating members 300, a thermoplastic film 16 and at least one flexible circuit board 14. The first busbar unit(s) 12 each includes a plurality of busbars 100 disposed on a surface of the tray 11 and arranged at intervals along a length direction of the tray 11. The insulating members 300 are located in each first busbar unit 12 and connected to the tray, and each insulating member 300 is disposed between two adjacent busbars 100 along the length direction of the tray 11 such that the two adjacent busbars 100 at two sides of the insulating member 300 are insulated. The thermoplastic film 16 is configured to wrap the tray 11, the first busbar unit(s) 12 and the insulating members 300 as a whole. The flexible circuit board(s) 14 are disposed on the thermoplastic film 16. Each first busbar unit 12 is provided with a corresponding flexible circuit board 14, and each flexible circuit board 14 is connected to all busbars 100 in the corresponding first busbar unit 12 and is located at a side of the first busbar unit 12.

In some embodiments, each first busbar unit 12 includes a column of busbars 100 arranged on the tray 11 at intervals along the length direction of the tray 11, the busbars 100 are used for connecting with terminal posts of the battery cells, with each busbar 100 connecting with one battery cell.

Specifically, the battery collection and connection assembly includes a plurality of insulating members 300 located in the first busbar unit(s) 12. Each insulating member 300 is arranged between two adjacent busbars 100 in the same first busbar unit 12. One insulating member 300 is arranged between every two adjacent busbars 100 in each first busbar unit 12 to ensure that the adjacent busbars 100 do not contact each other, thereby preventing short circuit from occurring due to contact between the busbars 100 in the first busbar unit 12.

Generally, each first busbar unit 12 only has one column of the busbars 100. That is, the busbars 100 are distributed at intervals in the column and the busbars 100 may be evenly spaced or unevenly spaced.

After the busbars 100 and insulating members 300 are arranged on the tray 11, the thermoplastic film 16 wraps the surface of the tray 11, all the busbars 100 on the tray 11, and all the insulating members 300 on the tray 11 into an integrated structure, facilitating the arrangement of the flexible circuit board(s) 14.

It will be noted that, the tray 11 in the present application is generally made of a plastic material, which have good insulating properties and plasticity.

Compared with existing technology where only a plastic tray or a thermoplastic film serves as the carrying structure of the CCS components, in the battery collection and connection assembly in the present application, the busbars 100 are arranged on the plastic tray 11, and then the busbars 100 and tray 11 are fully wrapped with the thermoplastic film 16 to form the integrated structure, and next the flexible circuit board(s) 14 are arranged on the thermoplastic film 16. Therefore, the busbars and the collection cable harnesses are all integrated in the structure, which has a high degree of integration and can improve the overall structural performance of the battery pack. In addition, the battery collection and connection assembly has a structural strength of a certain degree, and compared with the prior art where only the plastic tray is used as the carrying structure, the battery collection connection component has a lighter weight, which can improve the lightweight characteristics of the battery pack.

Similarly, the tray 11 is provided with a plurality of flexible circuit boards 14, each first busbar unit 12 is connected to a corresponding flexible circuit board 14, and each of the flexible circuit boards 14 is disposed on the thermoplastic film 16.

It will be understood that, in the battery collection and connection assembly 10, one insulating member 300 is disposed between every two adjacent busbars 100 in each first busbar unit 12, and is used to separate the two adjacent busbars 100 in the first busbar unit 12, which can prevent short circuit from occurring due to contact between the adjacent busbars 100 when the battery cells are densely arranged in the battery pack, thereby improving the safety and stability of the battery pack.

It will be noted that, one flexible circuit board 14 is arranged corresponding to each column of busbars 100 on the tray 11, and the flexible circuit boards 14 are generally arranged on the thermoplastic film 16 by means of adhesive.

It will be added that, the insulating members 300 are generally made of plastic.

In some embodiments, the first busbar unit(s) 12 of the battery collection assembly are arranged at a middle portion of the tray 11.

In some embodiments, the battery collection assembly has two first busbar units 12 adjacently arranged at the middle portion of the tray 11, the busbars 100 in one of the two first busbar units 12 are arranged in a one-to-one correspondence with the busbars 100 in the other of the first busbar units 12, and the insulating members 300 in one of the first busbar units 12 are arranged in a one-to-one correspondence with the insulating members 300 in the other of the first busbar units 12.

It will be noted that the "one-to-one correspondence" of the busbars 100 means that each busbar 100 in the one first busbar unit 12 is located at the same position as each busbar 100 in the other first busbar unit 12 in the width direction of the tray 11.

Similarly, the "one-to-one correspondence" of the insulating members 300 means that each insulating member in the one first busbar unit 12 is located at the same position as a corresponding insulating member 300 in the other first busbar unit 12 in the width direction of the tray 11.

In some embodiments, two busbars 100 respectively in two adjacent first busbar units 12 that are in one-to-one correspondence are also adjacent to each other.

In some embodiments, two insulating members 300 respectively in two adjacent first busbar units 12.

In some embodiments, each first busbar unit 12 is provided with multiple insulating members 300, with each insulating member 300 being disposed between two adjacent busbars 100 that are arranged at intervals along the length direction of the tray. Two insulating members 300 respectively in two adjacent first busbar units 12 that are in a one-to-one correspondence are of a one-piece structure.

It will be understood that, a new insulating member 300 may be formed with the two insulating members 300 to separate four busbars 100, in this case, two of which are arranged at one side of the new insulating member 300, and the other two of which are arranged at the other side of the new insulating member 300, and the two busbars 100 at the same side of the new insulating member 300 are located in two different and adjacent first busbar units 12.

That is, the two insulating members 300 originally arranged in two different first busbar units 12 are replaced with a longer insulating member 300. In this way, the number of the components of the battery collection and connection assembly 10 is reduced, and the assembly efficiency of the battery collection and connection assembly 10 is improved.

In some embodiments, the one-piece structure includes a first partition 301 and two second partitions 302 that are connected in a shape of a letter "I", the first partition 301 is disposed between two adjacent busbars 100, and each of the second partitions 302 is disposed at a side of the busbars 100 close to a flexible circuit board 14.

It will be understood that, the "I" shaped one-piece structure is as follows. The first partition 301 is disposed perpendicular to the length direction of the tray 11, the two second partitions 302 are connected to the two ends of the first partition 301, and the second partitions 302 each are arranged along the length direction of the tray 11, thereby separating two adjacent busbars 100 arranged in the length direction of the tray 11 and preventing the adjacent busbars 100 from contacting each other and causing a short circuit.

In some embodiments, the two second partitions 302 in the "I" shaped one-piece structure each are located at a side of the busbars 100 facing away from the other first busbar unit 12, and projections of the second partitions 302 in the width direction of the tray 11 each completely shield the busbars 100 close to the first partition 301.

In some embodiments, the one-piece structure may be configured with only the first partition 301.

In some embodiments, each of two adj acent first busbar unit 12 includes multiple insulating members 300, with each insulating member 300 being disposed between two adjacent busbars 100 that are arranged at intervals along the length direction of the tray, and all the insulating members 300 in the two adjacent first busbar units 12 are connected to form a one-piece structure. That is, all the insulating members 300 form a grid structure separating the busbars 100 that are arranged at intervals.

In some embodiments, a surface of each busbar 100 in the first busbar unit 12 is recessed relative to the surface of the tray 11, and each busbar 100 cooperates with the tray 11 to form a groove structure used for insertion engagement with a terminal post of a battery cell.

The surface of the busbar 100 being recessed relative to the surface of the tray 11 means that the surface of the busbar 100 is lower than the surface of the tray 11, thereby forming the groove structure in cooperation with the tray 11.

In some embodiments, the depth of the groove structure is in a range of 0.5 mm to 1.5 mm.

In some embodiments, the groove structure is a rectangular groove, and each side wall of the rectangular groove have a predetermined spacing from a corresponding side wall of the terminal post of the battery cell, with the predetermined spacing being in a range of 1 mm to 3 mm. That is, the rectangular groove should be slightly larger than the terminal post of the battery cell to facilitate the insertion of the terminal post into the groove structure.

It will be understood that, the groove structure is arranged, and thus the terminal post of the battery cell can be inserted into the groove structure in the insertion manner, which can quickly position the battery collection and connection assembly with respect to the battery cell module, thereby improving the efficiency of assembling the battery collection and connection assembly and the battery cell module, and thus improving the assembly efficiency of the battery pack.

In addition, the busbars 100 in the first busbar unit 12 each are provided with a surface lower than the surface of the tray 11 to form the groove structure, which can also serve to position the thermoplastic film 16, thereby facilitating the rapid positioning of the thermoplastic film 16.

In some embodiments, the battery collection and connection assembly 10 further includes at least one second busbar unit 13 arranged at an interval from the first busbar unit(s) 12, the second busbar unit(s) 13 are disposed at an outer side of the tray 11 and connected to the tray 12. The thermoplastic film 16 wraps the tray 11, the first busbar unit(s) 12, the second busbar unit(s) 13 and the insulating members 300 as a whole.

Specifically, each of the second busbar unit(s) 13 includes multiple busbars 100 in a column arranged at intervals along the length direction of the tray 11, and each second busbar unit 13 is arranged at an interval from the first busbar unit(s) 12. Each second busbar unit 13 is provided with a corresponding flexible circuit board 14 disposed at a side of the second busbar unit 13. All busbars 100 in each second busbar unit 13 are connected to the corresponding flexible circuit board 14.

Specifically, each busbar 100 in the second busbar unit 13 is separately connected to the tray 11. That is, an end of the busbar 100 in the second busbar unit 13 is connected to the tray 11, and the other end of the busbar 100 is disposed facing away from the tray 11.

In some embodiments, the first busbar unit(s) 12 are located at the middle portion of the tray 11, and the second busbar unit(s) 13 are located at the outer side of the tray 11.

In some embodiments, the tray 11 has two first busbar units 12 and two second busbar units 13, with the two first busbar units 12 being adjacently arranged at the middle portion of the tray 11, and the two second busbar units 13 being arranged on two sides of the two first busbar units 12. The two first busbar units 12 and the two second busbar units 13 each are provided with a corresponding flexible circuit board 14. That is, one second busbar unit 13, one flexible circuit board 14, one flexible circuit board 14, one first busbar unit 12, one first busbar unit 12, one flexible circuit board 14, one flexible circuit board 14 and one second busbar unit 13 are arranged in sequence along the width direction of the tray 11, with the two first busbar units 12 at the middle portion being adjacently arranged.

In some embodiments, the tray 11 is provided with a column 15 of explosion-proof valve holes, which includes a plurality of explosion-proof valve holes 200 that are arranged at intervals along the length direction of the tray 11. A first latch 201 is provided in a region of the tray 11 between two adjacent explosion-proof valve holes 200 in the column 15 of explosion-proof valve holes, and the first latch 201 is used for clamping an explosion-proof valve installed in the explosion-proof valve holes 200.

In some embodiments, the first latch 201 is a latch with a hexagonal base. The base of the hexagonal base has a thickness equal to the thickness of the rib wall of the explosion-proof valve to be installed on the tray 11.

It will be understood that, the arrangement of the latch with the hexagonal base is equivalent to providing a reinforcing rib at the opening of the explosion-proof valve on the tray 11, which can enhance the structural strength at the opening of the explosion-proof valve on the tray 11.

In some embodiments, the tray 11 has two columns 15 of explosion-proof valve holes 15. Specifically, one second busbar unit 13, one flexible circuit board 14, one column 15 of explosion-proof valve holes 15, one flexible circuit board 14, one first busbar unit 12, one first busbar unit 12, one flexible circuit board 14, one column 15 of explosion-proof valve holes, one flexible circuit board 14 and one second busbar unit 13 are arranged in sequence along the width direction of the tray 11.

In some embodiments, an end of the tray 11 is provided with reinforcing plate(s) 17, and a portion of a flexible circuit board 14 extends onto a reinforcing plate 17. The battery collection and connection assembly 10 further includes connector(s) 18, and each of the connector(s) 18 is located on a reinforcing plate 17 and electrically connected to a corresponding flexible circuit board 14. The connector(s) 18 are used for connection with an external control device.

It will be noted that a connector 18 is generally connected to the flexible circuit board 14 by pin(s), and each flexible circuit board 14 is connected to a corresponding connector 18.

In some embodiments, one second busbar unit 13, one first flexible circuit board, one column 15 of explosion-proof valve holes, one second flexible circuit board, one first busbar unit 12, one first busbar unit 12, one third flexible circuit board, one column 15 of explosion-proof valve holes, one fourth flexible circuit board and one second busbar unit 13 are arranged in sequence along the width direction of the tray 11. The end of the tray 11 is provided with a first reinforcing plate and a second reinforcing plate, with the first reinforcing plate being disposed close to the first flexible circuit board and the second flexible circuit board, and the second reinforcing plate being disposed close to the third flexible circuit board and the fourth flexible circuit board. The ends of the first flexible circuit board and the second flexible circuit board both extend to and are disposed on the first reinforcing plate, and the ends of the third flexible circuit board and the fourth flexible circuit board both extend to and are disposed on the second reinforcing plate. The first reinforcing plate is provided with a first connector connected to the first flexible circuit board and a second connector connected to the second flexible circuit board, and the second reinforcing plate is provided with a third connector connected to the third flexible circuit board and a fourth connector connected to the fourth flexible circuit board.

In some embodiments, the reinforcing plates 17 are epoxy plates.

In some embodiments, the end of the tray 11 has an extension portion, and the reinforcing plate 17 is disposed on the extension portion, the extension portion is used to support the reinforcing plate 17. The extension portion is provided with a first positioning pillar and a second positioning pillar, and the reinforcing plate 17 has a first positioning hole matching the first positioning pillar and a second positioning hole matching the second positioning pillar.

Generally, the first positioning pillar and the second positioning pillar are cylindrical, the first positioning hole is a circular hole, and the second positioning hole is a waist-type hole. It will be understood that the waist-type hole has a larger size than the circular hole, which can prevent difficulties in installation due to insufficient structural precision.

In some embodiments, the length direction of the waist-type hole is the direction of the line connecting the center of the waist-type hole with the center of the circular hole.

In some embodiments, a battery module is provided in the present application. The battery module includes a plurality of battery cells and the battery collection and connection assembly 10 described above. Each busbar 100 in the battery collection assembly 10 is used to connect two adjacent battery cells.

That is, each busbar 100 connects to two terminal posts, which are located on two adjacent battery cells, respectively.

Since the battery module adopts the battery collection and connection assembly 10 described in the embodiments, the battery module has at least some or all of the beneficial effects of the battery collection assembly described in the embodiments, which will not be repeated here.

In some embodiments, a battery pack is provided in the present application. The battery pack includes the battery module described above.

Since the battery pack adopts the battery module, which includes the battery collection and connection assembly 10 described above, the battery pack has at least some or all of the beneficial effects of the battery collection and connection assembly described in the embodiments, which will not be repeated here.

In some embodiments, the battery pack includes a bottom box, a cover plate and the battery module described above. The cover plate is disposed on the bottom box to form a receiving cavity in conjunction with the bottom box, and the battery module is disposed in the receiving cavity, and thus the battery pack is formed.

In summary, although the present application has been disclosed as above with preferred embodiments, the preferred embodiments are not intended to limit the present application. Those of ordinary skill in the art, without departing from the spirit and scope of the present application, may make various modifications and embellishments within the spirit and scope of the present application, and therefore the scope of protection of the present application shall be subject to the scope defined by the claims.

## Claims

1. A battery collection and connection assembly, comprising:
a tray;
at least one first busbar unit, each of the at least one first busbar unit comprising a plurality of busbars that are disposed on a surface of the tray and arranged at intervals along a length direction of the tray;
a plurality of insulating members located in the at least one first busbar unit and connected to the tray, wherein each of the plurality of insulating members is arranged between two adjacent busbars along the length direction of the tray to insulate the two adjacent busbars at two sides of the insulating member;
a thermoplastic film configured to wrap the tray, the at least one first busbar unit and the plurality of insulating members as a whole; and
at least one flexible circuit board disposed on the thermoplastic filmone or more of the at least one flexible circuit board being in a one-to-one correspondence with the at least one first busbar unit, and each of the one or more flexible circuit boards being connected to all the busbars in the corresponding first busbar unit and located at a side of the first busbar unit.

2. The battery collection and connection assembly according to claim 1, wherein the at least one first bus unit comprised in the battery collection and connection assembly is provided in a number of two, and the two first busbar units are adjacently arranged at a middle portion of the tray; the busbars in one of the two first busbar units are arranged in a one-to-one correspondence with the busbars in another of the two first busbar units, and the insulating members located in the one first busbar unit are arranged in a one-to-one correspondence with the insulating members located in the another first busbar unit.

3. The battery collection and connection assembly according to claim 2, wherein each insulating member located in the one first busbar unit and its corresponding insulating member located in the another first busbar unit are of a one-piece structure.

4. The battery collection and connection assembly according to claim 3, wherein the one-piece structure comprises a first partition and two second partitions that are connected to resemble a shape of a letter "I", the first partition is disposed between the two adjacent busbars, and each of the second partitions is disposed at a side of the busbars close to one of the at least one flexible circuit board.

5. The battery collection and connection assembly according to claim 1, wherein a surface of each of the plurality of busbars in the first busbar unit is recessed relative to a surface of the tray, and each busbar cooperates with the tray to form a groove structure for insertion engagement with a terminal post of a battery cell.

6. The battery collection and connection assembly according to claim 1, wherein the battery collection and connection assembly further comprises at least one second busbar unit arranged at an interval from the at least one first busbar unit, the at least one second busbar unit is disposed at an outer side of the tray and connected to the tray, and the thermoplastic film wraps the tray, the at least one first busbar unit, the at least one second busbar unit and the insulating members as a whole.

7. The battery collection and connection assembly according to any one of claims 1 to 6, wherein the tray is provided with a column of explosion-proof valve holes, the column of explosion-proof valve holes comprises a plurality of explosion-proof valve holes arranged at intervals along the length direction of the tray, a first latch is provided in a region of the tray between two adjacent explosion-proof valve holes in the column of explosion-proof valve holes, and the first latch is used for clamping an explosion-proof valve installed in the plurality of explosion-proof valve holes.

8. The battery collection and connection assembly according to any one of claims 1 to 6, an end of the tray is provided with a reinforcing plate, and a portion of a flexible circuit board in the at least one flexible circuit board extends onto the reinforcing plate;
the battery collection and connection assembly further comprises a connector located on the reinforcing plate and electrically connected to the flexible circuit board, and the connector is used for connection with an external control device.

9. A battery module, comprising:
a plurality of battery cells; and
a battery collection and connection assembly as described in any one of claims 1 to 8, each busbar in the battery collection and connection assembly being used to electrically connect two adjacent battery cells of the plurality of battery cells.

10. A battery pack, comprising the battery module as described in claim 9.
